# EUROPEAN PATENT APPLICATION

(11) **EP 2 675 241 A1**
(43) Date of publication of application: **18.12.2013**
(21) Application number: 12171499.2
(22) Date of filing: 11.06.2012
(51) Int. Cl.: H04W 88/10, H04W 72/04, H04L 5/00

(54) **Interworking base station between a wireless network and a cellular network**

(71) Applicant: Alcatel Lucent, 75007 Paris (FR)
(72) Inventor: Urie, Alistair, 91620 Nozay (FR)
(74) Representative: Camus, Olivier Jean-Claude

(57) **Abstract**

This invention concerns an interworking base station (BS) between a wireless network and a cellular network. The base station (BS) is adapted to support carrier aggregation and is adapted to employ :
■a primary carrier (PC) using cellular access technology providing communication between a user terminal (UE) and said base station, said primary carrier (PC) being used to assure a robust communication link;
■at least one secondary carrier (SC) using a wireless access technology providing communication between said user terminal (UE) and said base station (BS), said at least one secondary carrier (SC) being used to assure a high rate wireless connexion;
■a control mechanism (MAC Mux) to direct the delivery of high-speed data services over the primary carrier (PC) using a cellular access technology, the secondary carrier (SC) using wireless access technology or the combination of the cellular and wireless access technologies.

## Description

### FIELD OF THE INVENTION

The present invention relates to an interworking base station between a wireless network and a cellular network. The invention concerns also a user terminal adapted to communicate with an interworking base station between a wireless network and a cellular network.

### BACKGROUND

A typical cellular data user today has access to high-speed Internet services at the office and home using Wireless LAN (also called WLAN or Wi-Fi) technologies and uses wireless cellular data networks to provide the same services while moving or whenever the user is outside WLAN coverage.

Wireless LAN has proven to be an excellent wireless access technology and can be used to provide high-speed wireless data in small area. Likewise, cellular access has proven to be an excellent technology to provide high-speed wireless area in wider areas and most modern mobile devices now support both cellular and wireless LAN access technologies. There exists today a need to improve the integration of WLAN and cellular networks to provide users with a "seamless" high-speed service with mobile devices dynamically moving between wireless and cellular access. This is however not simple to implement in a seamless manner.

Currently, most known solutions for cellular and wireless LAN interworking are based on the use of independent radio access networks (for example, long term evolution (also called LTE network) and WLAN network and then a core network based interworking solution using a packet data network gateway (also called PDN GW) as the mobility anchor.

It could be noted that the current state of the art supports mobility of the entire terminal, individual IP connections or APNs (MAPCON) or individual IP flows (IFOM).

The primary drawbacks of these solutions is that they rely on the terminal to initiate the mobility event and functionality in the packet core to merge the cellular and wireless access technology connection and that these parallel connections through to the packet core must be used even when both cellular and WLAN connectivity is available at the same dual mode radio node, that is, a radio node or base station that supports both cellular and WLAN access technologies.

### SUMMARY OF THE INVENTION

Accordingly, the present invention is directed to an interworking base station between wireless LAN access and a cellular network access allowing the support of extremely rapid mobility between the two access modes, i.e. between wireless access mode and cellular access mode without burdening the core network with excessive signalling.

To achieve these advantages, and in accordance with the purpose of the invention as embodied, the present invention relates to an interworking base station between a wireless network and a cellular network, said base station being adapted to supports carrier aggregation and being adapted to employs:
■ a primary carrier using cellular access technology providing communication between a user terminal and said base station, said primary carrier being used to assure a robust communication link;
■ at least one secondary carrier using a wireless access technology providing communication between said user terminal and said base station, said at least one secondary carrier being used to assure a high rate wireless connexion;
■ a control mechanism to direct the delivery of high-speed data services over:
   - the primary carrier using a cellular access technology,
   - the secondary carrier using wireless access technology or the combination of the cellular and wireless access technologies.

In others terms, this invention permits merging cellular and wireless access flows within a same base station and then presents a common network interface to a mobile core network with all related control signaling confined to within the radio access network. Therefore, thanks to the invention the high rate wireless access technology may be used whenever it is available without the need to support a mobility mechanism between the user terminal and the packet core with parallel connections using the two access modes.

In addition to the main features aforementioned in the previous paragraph, the interworking base station according to the invention may also have one or more of the additional features below, taken individually or in any technically feasible combination.

In a not limited embodiment, the wireless access technology is implemented using an access point that is located remotely from the base station.

In a not limited embodiment, the wireless access technology is implemented using an access point that is located within said base station.

In a not limited embodiment, the multiplex of high-speed data services transported over the said primary carrier using cellular access technology and said at least one secondary carrier using a wireless access technology communication is performed within the upper media access control layer of the cellular access technology in said base station with all higher communication layers common between cellular and access technologies.

In a not limited embodiment, the cellular access technology radio resource control layer is adapted to manage the establishment of at least one secondary carrier using a wireless access technology and to carry measurement reports related to the performance of said at least one secondary carrier.

In a not limited embodiment, the cellular access technology media access control layer is adapted to manage the multiplex of high-speed data services over the primary carrier using a cellular access technology and said at least one secondary carrier using a wireless access technology.

In a not limited embodiment, said wireless access technology access point uses an Ethernet protocol to transport control signaling and user traffic between the wireless technology access point and the base band unit of the base station.

In a not limited embodiment, the interworking base station comprises an adapted link layer control layer adapted to manage the transport of high-speed data services over the secondary carriers using a wireless access technology such that a timer function may be used to terminate an attempt to deliver specific data packets over the wireless access technology whenever it is taking an unusually long time due to poor radio conditions, interference or congestion.

In a not limited embodiment, said cellular network is adapted to use different technologies, such as:
- Long Term Evolution LTE,
- Code Division Multiple Access CDMA, or
- Wideband Code Division Multiple Access WCDMA.

In a not limited embodiment, said wireless access network is adapted to use different technologies, such as:
- Wireless LAN (WLAN) also known as Wi-Fi, based on the IEEE 802.11 standards,
- BlueTooth (BT), or
- Zigbee.

The invention concerns also a user terminal adapted to communicate with an interworking base station between a wireless network and a cellular network according to the invention, said user terminal comprising a control mechanism to direct the delivery of high-speed data services over:
- the primary carrier using a cellular access technology,
- the secondary carrier using wireless access technology or the combination of the cellular and wireless access technologies.

### BRIEF DESCRIPTION OF THE DRAWINGS

The accompanying drawings are included to provide a further understanding of the invention and are incorporated in and constitute a part of this specification, to illustrate embodiments of the invention and, together with the description, to explain the principles of the invention:
- Figure 1 represents, in a not limited embodiment, an interworking base station between a wireless network and a cellular network according to the invention ;
- Figure 2 illustrates, in a not limited embodiment, user plane protocol stacks in the user terminal and interworking base station including parallel cellular and wireless access radio interfaces according to the invention.

The same reference numerals will be used throughout the drawings to refer to the same or like parts.

### DESCRIPTION OF EMBODIMENTS

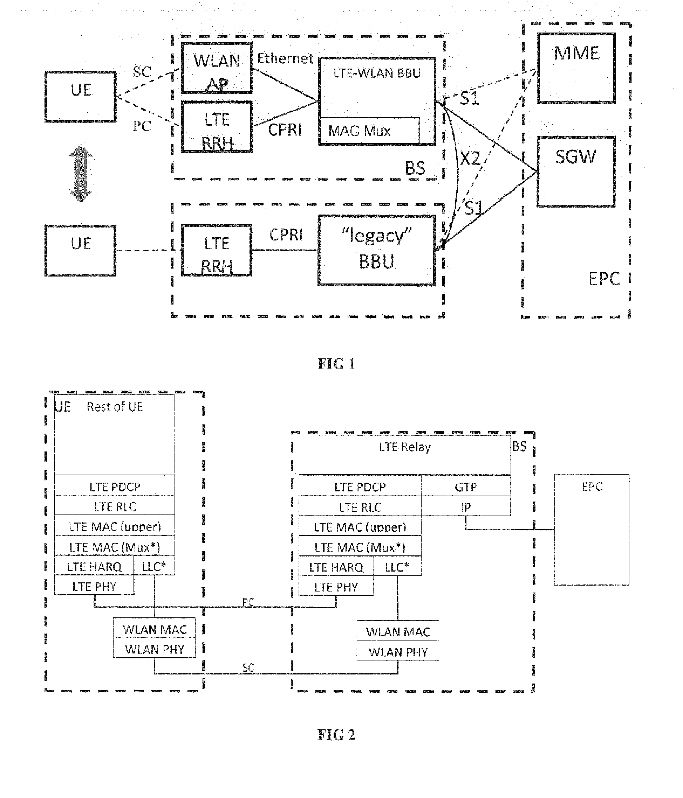

In reference to figures 1 and 2, an interworking base station BS between a wireless network and a cellular network is represented. In this not limited embodiment the cellular network uses the Long Term Evolution LTE technology. So, LTE acronym will be used to designate elements belonging to LTE technology and WLAN acronym will be used to designate elements belonging to Wireless Local Area Network WLAN technology.

The interworking base station BS employs:
■ a primary carrier PC using cellular access technology providing communication between a user terminal UE and said base station BS, said primary carrier PC being used to assure a robust communication link;
■ at least one secondary carrier SC using a wireless access technology providing communication between the user terminal UE and the base station BS, said at least one secondary carrier SC being used to assure a high rate wireless connexion;
■ a control mechanism MAC Mux (formed by a media access control layer multiplexing located in a base band unit BBU) to direct the delivery of high-speed data services over:
   - the primary carrier PC using a cellular access technology,
   - the at least one secondary carrier SC using wireless access technology or the combination of the cellular and wireless technologies.

It could be noted that the wireless access technology is implemented using an access point WLAN AP that is located within said base station BS. However, in another embodiment not illustrated, the wireless access technology is implemented using an access point WLAN AP that is located remotely from the base station BS.

In a not limited embodiment, the wireless access technology access point WLAN AP uses an Ethernet protocol to transport control signaling and user traffic to the base station BS. Furthermore, the wireless access technology access point WLAN AP comprises a physical layer WLAN PHY and a media access control layer WLAN MAC

In a not limited embodiment, the cellular access technology access point of the base station BS is formed by a remote radio head RRH and uses the common public radio interface protocols CPRI to transport control signaling and user traffic to the base station BS.

Furthermore, it could be noted that the multiplex of high-speed data services transported over the said primary carrier PC using cellular access technology and said secondary carrier SC or carriers using a wireless access technology communication is performed within the upper media access control layer MAC upper of said base station BS with all higher communication layers common between both access technologies, i.e. RLC, PDCP, Relay, GTP, IP....

Besides, the cellular access technology radio resource control layer RRC , part of the LTE control plane not illustrated in figure 2, is used to manage the establishment of one or more secondary carriers SC using a wireless access technology.

Furthermore, the adapted cellular access technology media access control layer MAC Mux* is used to manage the multiplex of high-speed data services over the primary carrier PC using a cellular access technology and one or more secondary carriers SC using a wireless access technology.

Besides, an adapted link layer control layer LLC* is employed to manage the transport of high-speed data services over the secondary carriers SC using a wireless access technology such that a timer function may be used to terminate an attempt (for example 10 microseconds) to deliver specific data packets over the wireless access technology whenever it is taking an unusually long time due to poor radio conditions, interference or congestion. This adaption is required to align the maximum transmission delay before failure of the wireless access and cellular access connections where the cellular access technology uses a Hybrid Automatic Repeat Request (also called HARQ) to manage re-transmission attempts while the wireless access technology uses its own ARQ scheme within the WLAN MAC layer.

The Radio Link Control RLC is used to repeat the transmission of packets that have failed to be sent over either the Primary carrier using cellular access technology or Secondary carrier using wireless with the adapted cellular access technology media access control layer MAC Mux* used to make a new multiplexing decision.

In the case of LTE technologies, the base station BS is formed by an eNodeB and supports LTE and WLAN access using the extended carrier aggregation concept and could consist of the following elements:
- Re-use of existing S1 and X2 interfaces towards the evolved packet core EPC and nearby eNodeB ;
- Re-use of existing upper layer protocols for user plane (PDCP, RLC, upper MAC);
- Re-use of standardized WLAN access point functions and protocols as defined by 802.11 with configuration change to add a new dedicated service set identifier (also called SSID) for the proposed carrier aggregation mode;
- Modificate existing lower MAC layer to add WLAN access as a new "UL/DL-SCH over WLAN";
- Modificate existing LTE RRC control plane protocol to add WLAN as a possible component of a "hybrid carrier aggregation" connection. This would require new RRC messages to establish the parallel WLAN radio link (discovery authentication and ciphering) plus extension of existing RRC messages related to carrier aggregation to add new information elements for WLAN case;
- Use of MAC addresses in wireless access point WLAN-AP and user terminal UE to handle the different use cases of WLAN only, MAPCOM and proposed LTE-WLAN carrier aggregation mode. In particular, once the user terminal has established a parallel WLAN connection then it announces it WLAN MAC address, and the MAC address of the serving WLAN access point, to the eNodeB using the modified RRC control plane protocol. These MAC addresses may then be used by the lower MAC layer in place of carrier numbers and local radio link identifiers to address specific flows to a given user terminal UE.

In the embodiment illustrated in figure 1, when a user terminal UE would first establish an LTE connection and attach to the evolved packet core EPC using well known 3GPP procedures.

Once connected to a specific eNobeB, the user terminal UE would learn about the detailed capabilities of this eNodeB and if the eNodeB announces that it supports "LTE-WLAN carrier aggregation" then the user terminal UE would use Radio Resource control (also called RRC) signaling to obtain permission (this may involve interface S1-AP signaling to a mobility management entity MME in the evolved packet core EPC to recover dedicated subscriber information) and to obtain information on the appropriate WLAN service set identifier SSID to be used and the appropriate MAC address for the eNodeB.

The user terminal UE would then use 802.11 procedures to search for this Service Set Identifier SSID and "associate" with the WLAN AP including, where appropriate, the use of 802.11i i security mechanisms to establish a ciphered layer 2 link.

Once connected it would then send a probe message over the WLAN connection to the eNodeB MAC address (i.e. MAC level ping) and report back over the LTE RRC that a connection is available and to provide its own MAC address and the MAC address of the serving WLAN AP (a given eNB may offer LTE-WLAN carrier aggregation services over multiple access point, each sharing the same SSID). This information would then be used to establish a parallel WLAN connection which is considered as a secondary carrier and then an extended version of the well known LTE-LTE carrier aggregation method used to aggregate traffic over the available LTE and WLAN connection(s) with the eNB scheduler in the LTE upper MAC layer making flow decisions on a per TTI basis using information provided by the user terminal delivered over the RRC signaling channel and locally provided by the LTE physical layer LTE PHY and WLAN access point WLAN AP on the current availability and performance of the primary carrier PC and secondary carrier SC connections. Packets sent for transmission over the primary carrier using LTE access are protected using the LTE Hybrid Automatic Repeat Request LTE HARQ layer while packets sent for transmission over the secondary carrier using WLAN are protected using the WLAN media access control layer WLAN MAC layer and the adapted link layer control layer LLC (for example using an adapted version of IEEE 802.2). If the WLAN connection is lost then the existing LTE upper MAC and RLC layer mechanisms would be used to re-transmit any lost packets over the remaining LTE connection. If the LTE connection needs to be handed over to a new LTE cell on the same or different eNB or a legacy 2G or 3G cell then existing mobility mechanisms would be used including the option to report the availability of a WLAN connection as a secondary connection.

It could be noted that the invention concerns also a user terminal UE adapted to communicate with an interworking base station BS between a wireless network and a cellular network according to the invention. The user terminal UE comprises a control mechanism MAC Mux to direct the delivery of high-speed data services over:
- the primary carrier PC using a cellular access technology,
- the secondary carrier SC using wireless access technology or the combination of the cellular and wireless access technologies.

In one not limited embodiment, the user terminal comprises an adapted link layer control layer LLC, this adapted link layer control layer LLC being employed to manage the transport of high-speed data services over the secondary carriers SC using a wireless access technology such that a timer function may be used to terminate an attempt (for example 10 microseconds) to deliver specific data packets over the wireless access technology whenever it is taking an unusually long time due to poor radio conditions, interference or congestion.

The invention has been described to the LTE application but it is understood that the invention is not limited to such application. So the cellular network can use the code division multiple access CDMA technology or the wideband code division multiple access WCDMA technology without out of the scope of the invention. Furthermore, the invention has been described to the WLAN application but it is understood that the invention is not limited to such application. So the wireless access network can use the BlueTooth technology or the Zigbee technology without out of the scope of the invention.

## Claims

1. Interworking base station (BS) between a wireless network and a cellular network, said base station (BS) being adapted to support carrier aggregation and being adapted to employ:
■ a primary carrier (PC) using cellular access technology providing communication between a user terminal (UE) and said base station, said primary carrier (PC) being used to assure a robust communication link;
■ at least one secondary carrier (SC) using a wireless access technology providing communication between said user terminal (UE) and said base station (BS), said at least one secondary carrier (SC) being used to assure a high rate wireless connexion;
■ a control mechanism (MAC Mux) to direct the delivery of high-speed data services over:
• the primary carrier (PC) using a cellular access technology,
• the secondary carrier (SC) using wireless access technology or the combination of the cellular and wireless access technologies.

2. Interworking base station (BS) according to the preceding claim, wherein the wireless access technology is implemented using an access point (WLAN-AP) that is located remotely from the base station (BS).

3. Interworking base station (BS) according to claim 1, wherein the wireless access technology is implemented using an access point (WLAN-AP) that is located within said base station (BS).

4. Interworking base station (BS) according to any of the preceding claims, wherein the multiplex of high-speed data services transported over the said primary carrier (PC) using cellular access technology and said at least one secondary carrier (SC) using a wireless access technology communication is performed within the upper media access control layer (MAC upper) of the cellular access technology in said base station (BS) with all higher communication layers common between cellular and access technologies.

5. Interworking base station (BS) according to any of the preceding claims, wherein the cellular access technology radio resource control (RRC) layer is adapted to manage the establishment of at least one secondary carrier (SC) using a wireless access technology and carry measurement reports related to the performance of said secondary carriers (SC).

6. Interworking base station (BS) according to any of the preceding claims, wherein the cellular access technology media access control layer (MAC) is adapted to manage the multiplex of high-speed data services over the primary carrier (PC) using a cellular access technology and said at least one secondary carriers (SC) using a wireless access technology.

7. Interworking base station (BS) according to any of the preceding claims, wherein said wireless access technology access point (WLAN AP) uses an Ethernet protocol to transport control signaling and user traffic between the wireless technology access point (WLAN AP) and the base band unit (BBU) of the base station (BS).

8. Interworking base station (BS) according to any of the preceding claims, wherein comprises an adapted link layer control layer (LLC) adapted to manage the transport of high-speed data services over the secondary carriers (SC) using a wireless access technology such that a timer function is used to terminate an attempt to deliver specific data packets over the wireless access technology whenever it is taking an unusually long time.

9. Interworking base station (BS) according to any of the preceding claims, wherein said cellular network is adapted to use different technologies, such as:
- Long Term Evolution (LTE),
- Code Division Multiple Access (CDMA), or
- Wideband Code Division Multiple Access (WCDMA).

10. Interworking base station (BS) according to any of the preceding claims, wherein said wireless access network is adapted to use different technologies, such as:
- Wireless LAN,
- BlueTooth, or
- Zigbee.

11. User terminal (UE) adapted to communicate with an interworking base station (BS) between a wireless network and a cellular network according to any of the preceding claims 1 to 10, said user terminal comprising a control mechanism (MAC Mux) adapted to direct the delivery of high-speed data services over:
• the primary carrier (PC) using a cellular access technology,
• the secondary carrier (SC) using wireless access technology or the combination of the cellular and wireless access technologies.

## Amended claims

### Amended claims in accordance with Rule 137(2) EPC.

**1.** Interworking base station (BS) between a wireless network and a cellular network, said base station (BS) being adapted to support carrier aggregation and being adapted to employ:
• a primary carrier (PC) using cellular access technology providing communication between a user terminal (UE) and said base station, said primary carrier (PC) being used to assure a robust communication link;
• at least one secondary carrier (SC) using a wireless access technology providing communication between said user terminal (UE) and said base station (BS), said at least one secondary carrier (SC) being used to assure a high rate wireless connexion;
• a control mechanism (MAC Mux) to direct the delivery of high-speed data services over:
○ the primary carrier (PC) using a cellular access technology,
○ the secondary carrier (SC) using wireless access technology or the combination of the cellular and wireless access technologies,
• the Interworking base station (BS) being **characterized in that** the multiplex of high-speed data services transported over the said primary carrier (PC) using cellular access technology and said at least one secondary carrier (SC) using a wireless access technology communication is performed within the upper media access control layer (MAC upper) of the cellular access technology in said base station (BS) with all higher communication layers common between cellular and wireless access technologies.

**2.** Interworking base station (BS) according to the preceding claim, wherein the wireless access technology is implemented using an access point (WLAN-AP) that is located remotely from the base station (BS).

**3.** Interworking base station (BS) according to claim 1, wherein the wireless access technology is implemented using an access point (WLAN-AP) that is located within said base station (BS).

**4.** Interworking base station (BS) according to any of the preceding claims, wherein the cellular access technology radio resource control (RRC) layer is adapted to manage the establishment of at least one secondary carrier (SC) using a wireless access technology and carry measurement reports related to the performance of said secondary carriers (SC).

**5.** Interworking base station (BS) according to any of the preceding claims, wherein the cellular access technology media access control layer (MAC) is adapted to manage the multiplex of high-speed data services over the primary carrier (PC) using a cellular access technology and said at least one secondary carriers (SC) using a wireless access technology.

**6.** Interworking base station (BS) according to any of the preceding claims, wherein said wireless access technology access point (WLAN AP) uses an Ethernet protocol to transport control signaling and user traffic between the wireless technology access point (WLAN AP) and the base band unit (BBU) of the base station (BS).

**7.** Interworking base station (BS) according to any of the preceding claims, wherein comprises an adapted link layer control layer (LLC) adapted to manage the transport of high-speed data services over the secondary carriers (SC) using a wireless access technology such that a timer function is used to terminate an attempt to deliver specific data packets over the wireless access technology whenever it is taking an unusually long time.

**8.** Interworking base station (BS) according to any of the preceding claims, wherein said cellular network is adapted to use different technologies, such as:
- Long Term Evolution (LTE),
- Code Division Multiple Access (CDMA), or
- Wideband Code Division Multiple Access (WCDMA).

**9.** Interworking base station (BS) according to any of the preceding claims, wherein said wireless access network is adapted to use different technologies, such as:
- Wireless LAN,
- BlueTooth, or
- Zigbee.
